# EUROPEAN PATENT APPLICATION

(11) **EP 2 725 495 A1**
(43) Date of publication of application: **30.04.2014**
(21) Application number: 12801824.9
(22) Date of filing: 20.06.2012
(51) Int. Cl.: G06F 13/00

(54) **COMMUNICATION SYSTEM**

(30) Priority: 24.06.2011 JP 2011140658
(71) Applicant: Panasonic Corporation, Kadoma-shi, Osaka 571-8501 (JP)
(72) Inventor: UENO, Takeshi, Osaka-shi Osaka 540-6207 (JP)
(74) Representative: Appelt, Christian W.
(86) International application number: PCT/JP2012/065724
(87) International publication number: WO 2012/176797

(57) **Abstract**

A communication system includes: a plurality of servers (12); a customer premises equipment (2); a NAT router (3); and a polling server (11) that, in a case of having received a query signal from the customer premises equipment (2) after having received a communication request for the customer premises equipment (2) from each of the servers (12), returns a response signal including an effect of having received the communication request from the server (12), wherein, in a case of having received, from the polling server (11), the response signal including the effect of having received the communication request from the server (12), the customer premises equipment (2) starts communication with the server (12) that has transmitted the communication request. Even in a case where such a requests a plurality of services, a communication traffic volume of polling communication can be suppressed.

## Description

### [Technical Field]

The present invention relates to a communication system that performs communication between a server and a terminal.

### [Background Art]

Heretofore, in Patent Literature 1 to be described below, and the like, a polling communication system including polling servers has been known as means for grasping states of terminals by servers and the like.

The polling communication system is a server system, which is connected to a plurality of customer premises equipments, and communicates with the plurality of customer premises equipments. In usual, the customer premises equipments perform polling communication with a plurality of the polling servers in a dispersion manner. In the case where there occurs an event of transferring information with the respective customer premises equipments, the center server transmits communication requests of the customer premises equipments to the plurality of polling servers. When query packets are transmitted to the polling servers by the customer premises equipments, the polling servers return, to the customer premises equipments, response packets showing that the polling servers concerned have received the center server communication requests. In such a way, the customer premises equipments make packet requests for the center server, and packets are transmitted from the center server to the customer premises equipments.

However, in the case where each of the terminals is connected to a plurality of service servers, if the conventional polling communication system makes polling communication for each of a plurality of services, then a communication traffic volume required for the polling communication is increased as the number of services requested by the terminal is being increased.

In this connection, the present invention has been made in consideration of the actual circumstances mentioned above. It is an object of the present invention to provide a communication system capable of suppressing the communication traffic volume of the polling communication even in the case where the terminal requests the plurality of services.

### [Citation List]

### [Patent Literature]

[PTL 1] Japanese Patent Laid-Open Publication No. 2007-172048

### [Summary of Invention]

A communication system according to a first aspect that achieves the foregoing object includes: a plurality of servers provided in a first network; a terminal provided in a second network; a relay apparatus configured to relay a packet to be communicated between the first network and the second network, the relay apparatus being provided between the first network and the second network; and a polling server provided in the first network and configured, in a case of having received a query signal from the terminal after having received a communication request for the terminal from each of the servers, to return a response signal including an effect of having received the communication request from the server, characterized in that, in a case of having received, from the polling server, the response signal including the effect of having received the communication request from the server, the terminal starts communication with the server that has transmitted the communication request.

A second aspect is the communication system according to the first aspect, further including: a storage unit configured to store priority information indicating priority according to which the servers make communication with the terminal, characterized in that, in the case of having received the query signal from the terminal, then in the response signal, the polling server contains the communication request transmitted from the server and the priority information, and returns the response signal to the terminal, and based on the priority information included in the response signal, the terminal decides a communication starting order for the server that has made the communication request.

A third aspect is the communication system according to the first aspect, characterized in that each of the servers contains attribute information in the communication request to be transmitted to the polling server, the attribute information being requested for the terminal that becomes a communications partner, in the case of having received the query signal from the terminal, then in the response signal, the polling server contains the communication request transmitted from the server and the attribute information, and returns the response signal to the terminal, and to the server that has made the communication request, the terminal transmits terminal information that is based on the attribute information included in the response signal.

A fourth aspect is the communication system according to the first aspect, characterized in that the polling server stores intrinsic attribute information preset for each of the servers, and contains the intrinsic attribute information in the response signal.

A fifth aspect is the communication system according to either one of the third and fourth aspects, characterized in that the polling server has concealment determination information indicating whether or not to conceal the information included in the response signal, and in a case where it is unnecessary to conceal the information based on the concealment determination information, the information being included in the response signal, the polling server returns, to the terminal, a response signal including the information to be included in the response signal.

In accordance with the communication system according to each of the aspects mentioned above, in the case where the plurality of servers are connected to the polling server, and the polling server has received the communication request from each of the servers, then to the terminal, the polling server returns the response signal including the effect of having received the communication request from the server, and the terminal starts communication with the server. In accordance with the communication system as described above, the communication traffic volume of the polling communication can be suppressed even in the case where the terminal requests the plurality of services.

### [Brief Description of Drawings]

FIG. 1 is a block diagram showing a configuration of a polling communication system shown as an embodiment of the present invention.
FIG. 2 is a block diagram showing a state where communication requests are generated from a plurality of service servers in the polling communication system shown as the embodiment of the present invention.

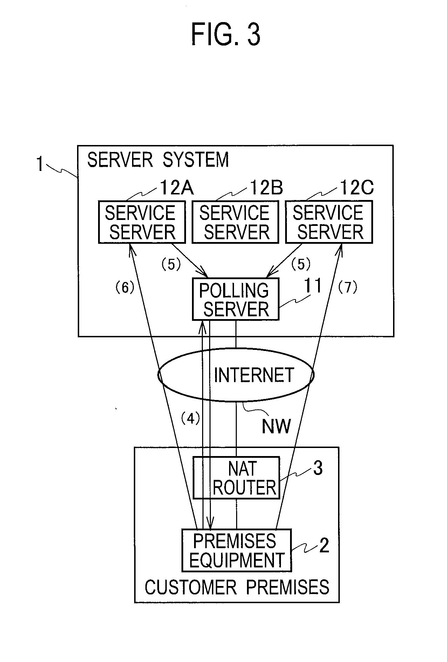

FIG. 3 is a block diagram showing a state where communication is started from a customer premises equipment to the plurality of service servers in order of priority in the polling communication system shown as the embodiment of the present invention.
FIG. 4 is a sequence diagram showing signals transferred between the respective units in the polling communication system shown as the embodiment of the present invention.
FIG. 5 is a block diagram showing a polling communication system as a comparative example.
FIG. 6 is a sequence diagram showing a state where property information of service servers is stored in a polling server in the polling communication system shown as the embodiment of the present invention.

### [Description of Embodiments]

A description is made below of embodiments of the present invention with reference to the drawings.

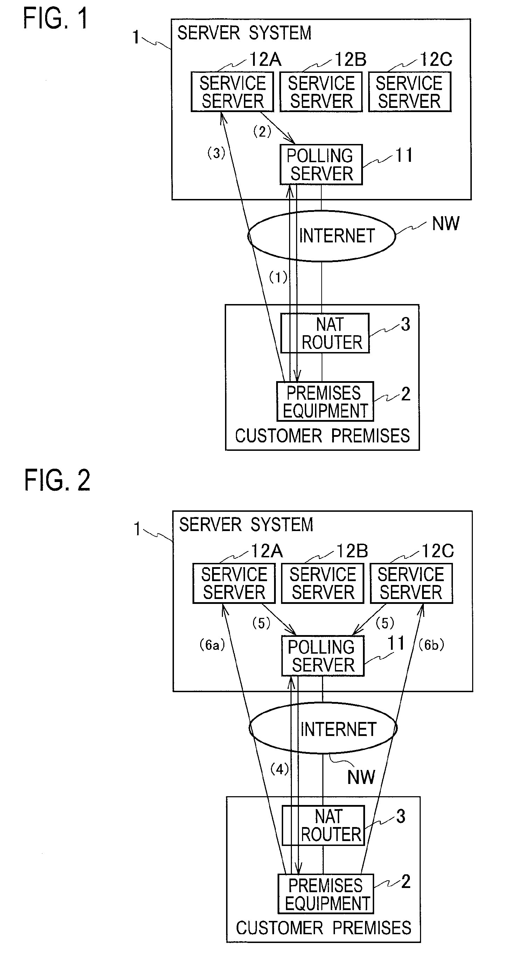

A polling communication system to which the present invention is applied is configured, for example, as shown in FIG. 1. This polling communication system includes: a server system 1; a customer premises equipment 2 of customer premises; and a NAT (Network Address Translation) router 3 as a relay apparatus.

In this polling communication system, the server system 1 is provided in a first network such as an IP network NW. Meanwhile, the customer premises equipment 2 is provided in a second network such as a customer premises network different from the first network. The NAT router 3 is provided between the first network and the second network.

In this polling communication system, since the NAT router 3 is present, communication cannot be made from the first network to the second network constructed in the customer's house. That is to say, by a global address transmitted from the first network, packets do not reach the customer premises equipment 2 to which a private address is imparted in the customer's house. Hence, in this polling communication system, it is necessary to start the communication from the customer premises equipment 2 to the service server 12. Therefore, in order that the customer premises equipment 2 can recognize that the service server 12 has made a request for communication with the customer premises equipment 2 concerned, polling communication is made between the customer premises equipment 2 and the polling server 11.

In this polling communication system, the server system 1 includes a plurality of service servers 12A, 12B and 12C (hereinafter, simply referred to as the "service server(s) 12" in the case of being collectively called). Moreover, the server system 1 includes the polling server 11 communicable with the plurality of service servers 12. Note that FIG. 1 illustrates an example where the service servers 12A, 12B and 12C, of which number is three, are connected to the single polling server 11; however, no limitations are imposed thereon.

The service servers 12A, 12B and 12C are individually provided with attributes (functions) different from one another. That is to say, the service servers 12A, 12B and 12C operate by pieces of software, which are different from one another, and transfer pieces of information, which are different from one another, with the customer premises equipment 2.

For example, the service server 12A is provided with a service function to manage security of the customer premises. The service server 12A acquires security information such as an electric key and a security sensor, which relates to security in the customer's house, and provides the security information to a mobile terminal, which is held by a user, at the time when abnormality occurs.

For example, the service server 12B is provided with a service function to remotely operate each of devices of the customer premises by a request from the mobile terminal held by the user or from the customer premises equipment 2. In the case of being supplied with a control signal to control an air conditioning device or the like, which is provided in the customer's house, from the mobile terminal held by the user, the service server 12B transmits the control signal to the customer premises equipment 2.

For example, the service server 12C is provided with a service function to manage electric power and the like of the devices of the customer premises. The service server 12C controls the customer premises equipment 2 to transmit information such as an amount of the electric power per unit time (one day, one hour or the like) and instantaneous electric power in the device, which is provided in the customer's house, at the time of acquiring the information concerned.

The polling server 11 is made communicable with the plurality of service servers 12, which are included in the server system 1, in the first network. The polling server 11 makes the polling communication with the customer premises equipment 2, which is in the second network, through the first network including the IP network NW. The polling server 11 receives, from each of the service servers 12, a communication request to request the communication with the customer premises equipment 2. In the case of having received the communication request from the service server 12, then to the customer premises equipment 2, the polling server 11 returns a response signal, which includes the communication request, in response to having received a query signal in the polling communication from the customer premises equipment 2.

The customer premises equipment 2 performs the polling communication of transmitting the query signal to the polling server 11 for each of predetermined periods and receiving a response signal to the query signal. The customer premises equipment 2 transmits such query signals to the polling server 11, which is connected to the plurality of service servers 12, in order to enjoy the services provided by the plurality of service servers 12. In the case where the communication request is included in such a response signal, the customer premises equipment 2 directly makes communication with the service server 12 that has transmitted the communication request concerned to the polling server 11.

A description is made of such operations of the polling communication system, which are as described above, along procedures (1), (2) and (3) in FIG. 1.

First, in the procedure (1), when a predetermined polling communication interval comes, the customer premises equipment 2 transmits the query signal to the polling server 11 through the NAT router 3. In response to having received the query signal, the polling server 11 determines whether or not to have received the communication request from the service server 12. In the case where the polling server 11 has not received the communication request from the server 12, the polling server 11 returns the response signal, which includes the effect of not having received the communication request, to the customer premises equipment 2.

Meanwhile, in the procedure (2), the service server 12A, which requests for the connection to the customer premises equipment 2, transmits the communication request to the polling server 11. Upon receiving the communication request from the service server 12A, the polling server 11 stores the communication request thus received.

Thereafter, by the procedure (1), the customer premises equipment 2 transmits the query signal to the polling server 11. Upon receiving the query signal, the polling server 11 returns the response signal, which includes the communication request, to the customer premises equipment 2 since the polling server 11 has received the communication request concerned from the service server 12A.

Upon receiving the response signal, which includes the communication request, from the polling server 11, the customer premises equipment 2 takes out the communication request, included in the response signal concerned. By the communication request concerned, the customer premises equipment 2 recognizes that the service server 12A requests for the communication.

In such a way, in the procedure (3), the customer premises equipment 2 transmits the packet request to the service server 12A in response to the communication request, and starts the communication with the service server 12A that has transmitted the communication request thereto. In response to having received the packet request from the customer premises equipment 2, the service server 12A concerned can transmit a response packet to the customer premises equipment 2.

Thereafter, for example, in the case where the service server 12A has transmitted a command to request for the security information in the house, the customer premises equipment 2 acquires such information as a state of an electric key in the house, and as detection results of security sensor and camera. In such a way, the customer premises equipment 2 can transmits the security information requested by the service server 12A.

In such a manner as described above, in accordance with this polling communication system, even in the case where it is necessary for the customer premises equipment 2 to communicate with the plurality of service servers 12, a plurality of the polling communications are integrated into the polling server 11. In such a way, it is not necessary for the customer premises equipment 2 to make the polling communication with each of services. Moreover, in accordance with this polling communication system, even in the case where the plurality of service servers 12 request for the communication with the customer premises equipment 2, the communication request can be integrated into the polling server 11.

Moreover, in this polling communication system, as shown in FIG. 2, sometimes, the communication requests are transmitted from the plurality of service servers 12 to the server system 1 within the predetermined polling communication interval in which the customer premises equipment 2 makes the polling communication (procedure (5)). In this case, the customer premises equipment 2 can recognize that it is necessary for the same to start the communication with two service servers, which are the service server 12A and the service server 12C, by a procedure (4). In such a way, the customer premises equipment 2 transmits the packet requests to the respective service server 12A and server system 12C substantially simultaneously (procedures (6a) (6b)). In such a way, in accordance with this polling communication system, even in the case where the communication requests are received from the two service servers 12 within the single polling communication interval, the two communication requests can be received only by transmitting the single query signal in the procedure (4).

From the above, in accordance with this polling communication system, the polling communications of the customer premises equipment 2 and the service servers 12 can be integrated into the polling server 11, and a communication traffic volume can be reduced in comparison with the case where the polling communication is made from each customer premises equipment 2 to each of the service servers 12. In such a way, in accordance with this polling communication system, even if such customer premises equipments 2 and the service servers 12 are increased, a communication band can be suppressed from becoming deficient by an amount of this increase.

Moreover, in this polling communication system, in the case where the communication requests are received from the two service servers 12 within the single polling communication interval, the customer premises equipment 2 may operate based on priority information of the service servers 12.

In the polling communication system as described above, the polling server 11 includes in advance a storage unit that stores priority information indicating priority according to which the service servers 12 make communication with the customer premises equipment 2. For example, this priority information is set based on the attributes of the service servers 12. For example, the priority of the service server 12 that handles the security information with high urgency is set "high". Meanwhile, the priority of the service server 12 that handles the electric power information with low urgency is set "low". Moreover, the priority information may be arbitrarily decided by the user who operates the customer premises equipment 2.

In the case of having received the query signal from the customer premises equipment 2, the polling server 11 adds the priority information and the communication requests coming from the service servers 12 to the response signal, and returns the response signal to the customer premises equipment 2 (procedure (4)). At this time, the polling server 11 adds the priority information of the service servers 12 concerned in combination with the communication requests of the service servers 12 which have transmitted the communication requests concerned.

Upon receiving the response signal, the customer premises equipment 2 decides a communication starting order for the service servers 12, which have made the communication requests, based on the priority information included in the response signal. In the case where the priority of the service server 12A is higher than that of the server system 12C, the customer premises equipment 2 first transmits the packet request to the service server 12A (procedure (6)), and subsequently transmits the packet request to the server system 12C (procedure (7)).

As described above, in accordance with this polling communication system, even in the case where the communication requests are generated from the plurality of service servers 12 within the predetermined polling communication interval at which the customer premises equipment 2 makes the polling communication, the customer premises equipment 2 can start communication with the plurality of service servers 12 in response to the priority. Hence, such an effect can be exerted that the connection can be rapidly ensured from the customer premises equipment 2 to the service server 12 with high urgency.

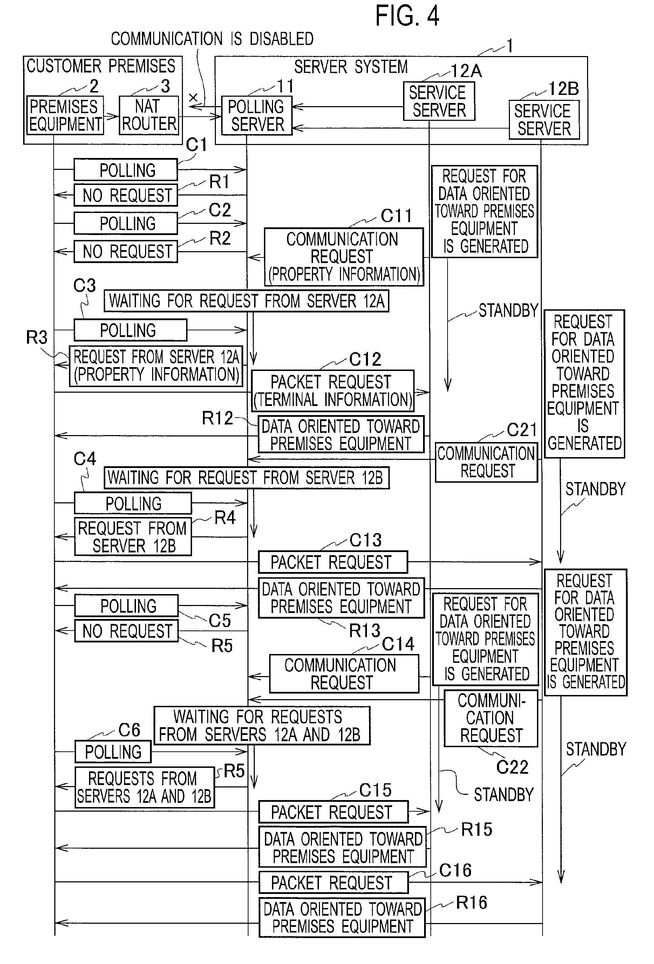

A description is made of a specific example in the polling communication system, which is mentioned above, with reference to FIG. 4. It is assumed that, in this operation example, two servers, which are the service server 12A and the service server 12B, are included in the server system 1.

First, the customer premises equipment 2 transmits query signals C1 and C2 at every predetermined polling communication interval. During a period while the customer premises equipment 2 is transmitting these query signals C1 and C2, no communication request is sent from the service servers 12A and 12B to the polling server 11, and accordingly, to the customer premises equipment 2, the polling server 11 transmits response signals R1 and R2 to the effect of not having received the communication requests.

Thereafter, when a request for data oriented toward the customer premises equipment 2 is generated, the service server 12A transmits a communication request C11 to the polling server 11. In such a way, the polling server 11 stores the communication request of the service server 12A.

Thereafter, when a query signal C3 is transmitted from the customer premises equipment 2 to the polling server 11, then to the customer premises equipment 2, the polling server 11 transmits a response signal R3 that responds to the query signal C3 concerned. At this time, the polling server 11 has already received the communication request transmitted from the service server 12A, and accordingly, the polling server 11 contains the communication request, which is transmitted from the service server 12A, in the response signal R3.

Upon receiving the response signal R3 from the polling server 11, the customer premises equipment 2 acquires the communication request from the response signal R3 concerned. By this communication request, the customer premises equipment 2 recognizes that the service server 12A has made a request to communicate therewith. In such a way, to the service server 12A, the customer premises equipment 2 transmits a packet request C12 for acquiring communication contents transmitted from the service server 12A concerned.

The service server 12A acquires the packet request C12 from the customer premises equipment 2. Upon receiving the packet request C12, the service server 12A transmits data R12, which is oriented toward the customer premises equipment 2, in response to the packet request C12 concerned. As the data oriented toward the customer premises equipment 2, there are mentioned: commands to acquire sensor values of a variety of sensors provided in the customer's house; and commands to control air conditioning instruments, lighting instruments and security instruments.

Through the NAT router 3, the customer premises equipment 2 acquires the data R12, which is transmitted from the service server 12A, and is oriented toward the customer premises equipment 2. In response to having received the data R12 oriented toward the customer premises equipment 2, the customer premises equipment 2 operates in accordance with the data R12 concerned, and then acquires such a variety of sensor values, controls the variety of instruments, and so on.

Moreover, also in the case where a communication request C21 is transmitted from the service server 12B to the polling server 11, then in a similar way, the polling server 11 transmits a response signal R4 to the customer premises equipment 2 with respect to a query signal C4 transmitted from the customer premises equipment 2. In this request signal R4, the polling server 11 contains information that the service server 12B requests connection. In such a way, the customer premises equipment 2 can transmit a packet request C13 to the service server 12B, and from the service server 12B, can acquire data R13 oriented toward the customer premises equipment 2.

As described above, in accordance with the polling communication system, even if direct connection cannot be established from each of the service servers 12 to the customer premises equipment 2, the polling communication is made from the customer premises equipment 2, whereby the customer premises equipment 2 and the service server 12 can be connected to each other in response to the request of the service server 12.

Moreover, as another operation example in the polling communication system, there is a case where communication requests C14 and C22 are transmitted from the two service servers 12A and 12B at a polling communication interval after a query signal C5 and a response signal R5 are transmitted and received. In this case, the polling server 11 stores two communication requests of the service server 12A and the service server 12B.

Thereafter, in the case where a query signal C6 is transmitted from the customer premises equipment 2 to the polling server 11, then to the customer premises equipment 2, the polling server 11 transmits a response signal R6 including the effect of having received the communication requests from the service server 12A and the service server 12B. Moreover, the polling server 11 may include the prestored priority information of the service servers 12 in the response signal R6.

In response to having received the response signal R6, the customer premises equipment 2 can transmit packet requests C15 and C17 substantially simultaneously therewith, and from the service server 12A and the service server 12B, can receive data R15 and R17, which are oriented toward the customer premises equipment 2.

In the case where the priority of the service server 12A is higher than that of the service server 12B when the priority information is included in the response signal R6, the customer premises equipment 2 first transmits the packet request C15 to the service server 12A, and acquires the data R15 oriented toward the customer premises equipment 2. Thereafter, the customer premises equipment 2 transmits the packet request C16 to the service server 12B, and acquires the data R16 oriented toward the customer premises equipment 2.

As described above, in accordance with the polling communication system, even in the case where the customer premises equipment 2 uses a plurality of the services, the communication traffic volume of the polling communication can be suppressed.

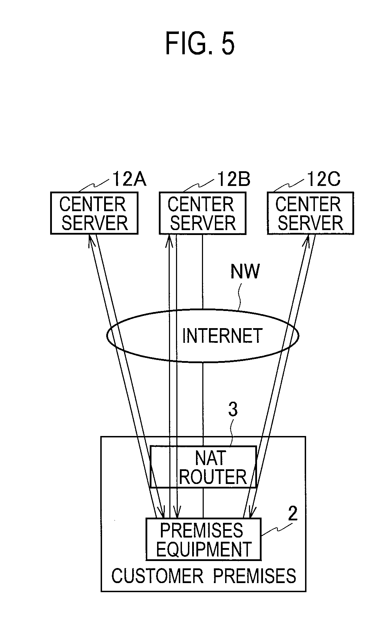

When a description is made of a polling communication system as a comparative example with this embodiment, the polling communication system being taken as an example, the polling communication system is as shown in FIG. 5. In the case where three services are distributed to the respective three service servers, which are the service server 12A, the service server 12B and the service server 12C, the customer premises equipment 2 must obtain the response signals by transmitting the query signals to the three service servers 12. Moreover, though depending on types of the services, for example, with regard to the security information or the like, the urgency thereof is high, and it is necessary to make a high frequency of the polling communication.

As opposed to this, in accordance with the polling communication system of this application, even in the case where the plurality of service servers 12 are present, the polling communication just needs to be made with the polling server 11, which is single, and the communication traffic volume can be suppressed.

Moreover, this polling communication system may include property information (attribute information) in the communication requests transmitted from the service servers 12 to the polling server 11. This property information is information indicating the attributes of the service servers 12. For example, as the property information, there are: information requested by the service servers 12 to the customer premises equipment 2; and contents which the service servers 12 desire to control for the customer premises equipment 2.

In the case of having received the property information from each of the service servers 12, the polling server 11 contains the communication request and the property information in the response signal transmitted as a result that the query signal is thereafter received from the customer premises equipment 2. Upon receiving the response signal, the customer premises equipment 2 can acquire the property information included in the response signal concerned. In response to this, the customer premises equipment 2 acquires information (terminal information) of the customer premises equipment 2, which is based on the property information, and contains the acquired information in the packet request to be transmitted to the service server 12.

The service server 12 takes out the information of the customer premises equipment 2, which is included in the packet request, and can acquire the information that is based on the property information transmitted to the polling server 11 by the service server 12 itself.

Specifically, the service server 12A contains the property information of the service server 12A concerned in the communication request C11 in FIG. 4. The polling server 11 stores the property information, which is transmitted from the service server 12A, together with the communication request. Thereafter, in response to that the query signal C3 is transmitted from the customer premises equipment 2, the polling server 11 contains the property information in the response signal R3, and transmits the response signal R3 to the customer premises equipment 2. By referring to the property information, the customer premises equipment 2 can contain the information (terminal information), which is based on the property information, in the packet request, and can directly return the packet request to the service server 12A.

From the above, in accordance with this polling communication system, the polling server 11 can contain the necessary property information to be transmitted from the polling server 11 concerned to the customer premises equipment 2, whereby the number of times that the communication is made from the terminal to each of the service servers 12 in response to the communication request can be reduced. Hence, in accordance with this polling communication system, the communication band can be further suppressed from becoming deficient in combination with the above-mentioned embodiment.

Moreover, in the polling communication system shown as the embodiment of the present invention, the polling server 11 may store property information (intrinsic attribute information) preset in each of the service servers 12, and may contain the property information in the response signal.

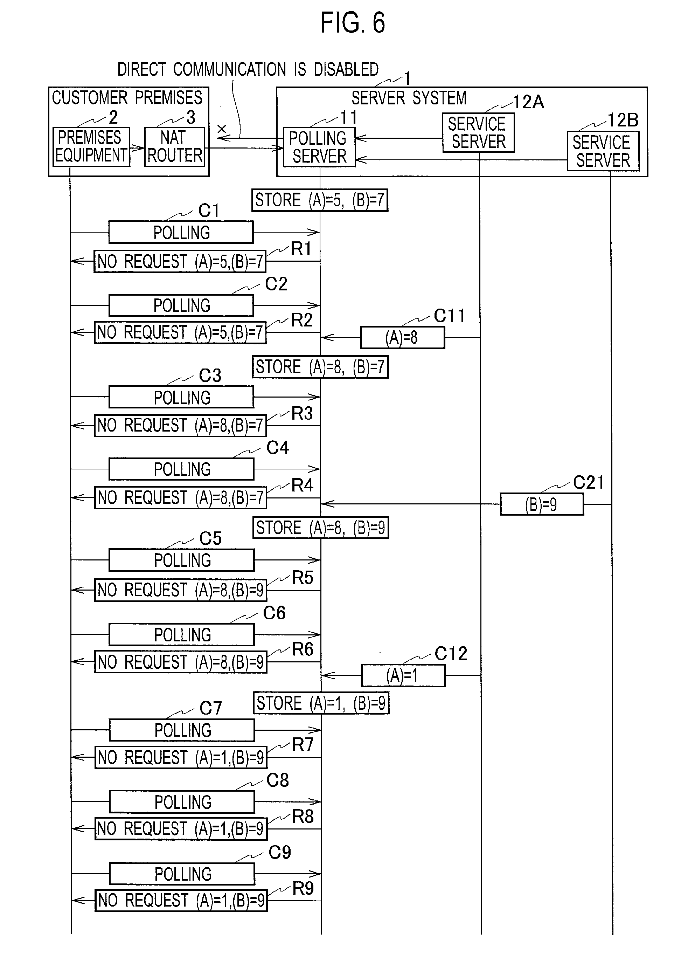

Specifically, as shown in FIG. 6, the polling server 11 stores property information "(A) = 5" of the service server 12A connected thereto and property information "(B) = 7" of the service server 12B connected thereto. These pieces of property information are pieces of default (initialized) property information, which are designated by the service server 12A and the service server 12B. These pieces of default property information are pieces of information, which are intrinsic to the service server 12A and the service server 12B. For example, these pieces of information include security information, electric power/energy information and the like, which are specified by numeric values. In this specific example, the default property information of the service server 12A is "5", and the default property information of the service server 12B is "7".

In the case where the communication request are not transmitted from the service server 12A and the service server 12B, the customer premises equipment 2 transmits the query signal C1 to the polling server 11. Even if the polling server 11 has not received the communication requests, the polling server 11 stores the pieces of default property information of the service server 12A and the service server 12B in the response signal R1 to the query signal C1 concerned. In such a way, the customer premises equipment 2 can acquire the pieces of default property information of the service server 12A and the service server 12B, which are connected to the polling server 11. The same is also applied to the subsequent case where the query signal C2 and the response signal R2 are transmitted and received.

Thereafter, in the case where the information to be acquired from the customer premises equipment 2 is changed in the service server 12A, the service server 12A transmits a communication request C11, which includes property information with a value of "8" so as to transmit the information thus changed, to the polling server 11.

Upon receiving the communication request C11 including the changed property information, the polling server 11 changes the property information of the service server 12A to "8", and stores "8". Thereafter, the query signal C3 is transmitted from the customer premises equipment 2, and the polling server 11 receives the query signal C3 concerned. The polling server 11 transmits a response signal R3, which does not have the communication request and includes the property information "8" changed by the service server 12A.

Thereafter, in the case where the information to be acquired from the customer premises equipment 2 is changed in the service server 12B, the service server 12B transmits a communication request C21, which includes property information with a value of "9" so as to transmit the information thus changed, to the polling server 11.

Upon receiving the communication request C21 including the changed property information, the polling server 11 changes the property information of the service server 12B to "9", and stores "9". Thereafter, the query signal C4 is transmitted from the customer premises equipment 2, and the polling server 11 receives the query signal C4 concerned. The polling server 11 transmits a response signal R4, which does not have the communication request and includes the property information "9" changed by the service server 12B.

When the customer premises equipment 2 transmits the query signal C5 at the subsequent polling communication interval, the polling server 11 transmits a response signal R5, in which the communication request is not present, the property information of the service server 12A is "8", and the property information of the service server 12B is "9".

Furthermore, in the case where the property information of the service server 12A is changed to "1", the service server 12A transmits the property information "1" of itself as the communication request C12. In such a way, the polling server 11 can further change the property information of the service server 12A.

As described above, in accordance with this polling communication system, each of the service servers 12 itself allows the polling server 11 to store the default property information of its own. Moreover, the service server 12 can allow the polling server 11 to store the changed property information. In such a way, in the case of having received the query signal from the customer premises equipment 2, the polling server 11 can store and transmit, as the response signal, the default property information of each of the service servers 12 or the changed property information thereof. Hence, to each of the service servers 12, the customer premises equipment 2 can transmit terminal information that is based on the property information of the service server 12 concerned.

Thereafter, even if query signals C8 and C9 are transmitted to the polling server 11 from the customer premises equipment 2, the polling server 11 can return response signals R8 and R10, which include the property information stored therein, to the query signals C8 and C9.

As described above, in the case where the service server 12 has the communication request, the polling communication system can establish connection from the customer premises equipment 2 to the service server 12 based on the property information stored in the polling server 11. Hence, in accordance with this polling communication system, the communication traffic volume between the customer premises equipment 2 and the service server 12 can be suppressed, and the communication band can be further suppressed from becoming deficient.

Moreover, in the polling communication system mentioned above, desirably, the polling server 11 has concealment determination information indicating whether or not to conceal the information included in the response signal to be transmitted to the customer premises equipment 2. In the case where it is unnecessary to conceal the information, which is included in the response signal, based on the concealment determination information, the polling server 11 returns a response signal, which includes the information to be included in the response signal concerned, to the customer premises equipment 2.

In the polling communication system as described above, as mentioned above, the polling server 11 conceals the property information to be transmitted from the service server 12 together with the communication request, or conceals the property information stored in the polling server 11. For this purpose, the polling server 11 compares the concealment determination information prestored therein and the property information with each other. For example, this concealment determination information is property information indicating the contents of the information, which the service server 12 connected to the pulling server 11 communicates, and is table data indicating whether or not to conceal the property information concerned. In the case of having received the property information from the service server 12, the polling server 11 determines whether or not to conceal the property information concerned. In the case of having determined to conceal the property information, the polling server 11 contains, in the response signal, information telling that the information to be transferred with the service server 12 will be concealed.

In the case of having received the response signal from the polling server 11, the customer premises equipment 2 can recognize that the information telling that the information will be concealed is included therein. In the case of concealing the information, the customer premises equipment 2 transmits the packet request to the service server 12 by using an encryption scheme and an encryption key, which are preset with the service server 12. In such a way, the polling communication system can conceal which type of information is to be transferred between the customer premises equipment 2 and the service server 12.

Moreover, desirably, this polling communication system also conceals the information to be transmitted from the service server 12 to the customer premises equipment 2. In this case, the service server 12 transmits the data, which is oriented toward the customer premises equipment 2, to the service server 12 by using the encryption scheme and the encryption key, which are set with the customer premises equipment 2. In such a way, the polling communication system can conceal which type of information the information requested for the customer premises equipment 2 by the service server 12 is.

Furthermore, desirably, this polling communication system also conceals the information to be transmitted from the customer premises equipment 2 to the service server 12 as a result of being requested by the service server 12. In such a way, for example, in the case of transmitting the security information from the customer premises equipment 2 to the service server 12, the polling communication system can conceal the security information concerned.

As described above, in accordance with this polling communication system, the information to be transferred between the polling server 11 and the customer premises equipment 2 and the information to be transferred between the customer premises equipment 2 and each of the service servers 12 can be concealed. In such a way, in accordance with this polling communication system, even in the case where the plurality of service servers 12 are connected to the polling server 11, and the customer premises equipment 2 is connected to the single polling server 11, leakage of the information which the customer premises equipment 2 communicates can be suppressed.

Note that the embodiment mentioned above is merely an example of the present invention. Therefore, the present invention is not limited to the above-mentioned embodiments, and it is a matter of course that those other than this embodiment are changeable in various ways in response to design and the like as long as those are incorporated within the scope without departing from the technical idea according to the present invention.

### [Industrial Applicability]

The present invention is applicable to the industry that constructs the communication system including the servers and the terminals.

### [Reference Signs List]

- 1: SERVER SYSTEM
- 2: CUSTOMER PREMISES EQUIPMENT
- 3: NAT ROUTER
- 11: POLLING SERVER
- 12A, 12B, 12C: SERVICE SERVER

## Claims

1. A communication system comprising:
a plurality of servers provided in a first network;
a terminal provided in a second network;
a relay apparatus configured to relay a packet to be communicated between the first network and the second network, the relay apparatus being provided between the first network and the second network; and
a polling server provided in the first network and configured, in a case of having received a query signal from the terminal after having received a communication request for the terminal from each of the servers, to return a response signal including an effect of having received the communication request from the server,
wherein, in a case of having received, from the polling server, the response signal including the effect of having received the communication request from the server, the terminal starts communication with the server that has transmitted the communication request.

2. The communication system according to claim 1, further comprising:
a storage unit configured to store priority information indicating priority according to which the servers make communication with the terminal,
wherein, in the case of having received the query signal from the terminal, then in the response signal, the polling server contains the communication request transmitted from the server and the priority information, and returns the response signal to the terminal, and
based on the priority information included in the response signal, the terminal decides a communication starting order for the server that has made the communication request.

3. The communication system according to claim 1,
wherein each of the servers contains attribute information in the communication request to be transmitted to the polling server, the attribute information being requested for the terminal that becomes a communications partner,
in the case of having received the query signal from the terminal, then in the response signal, the polling server contains the communication request transmitted from the server and the attribute information, and returns the response signal to the terminal, and
to the server that has made the communication request, the terminal transmits terminal information that is based on the attribute information included in the response signal.

4. The communication system according to claim 1, wherein the polling server stores intrinsic attribute information preset for each of the servers, and contains the intrinsic attribute information in the response signal.

5. The communication system according to either one of claims 3 and 4, wherein the polling server has concealment determination information indicating whether or not to conceal the information included in the response signal, and in a case where it is unnecessary to conceal the information based on the concealment determination information, the information being included in the response signal, the polling server returns, to the terminal, a response signal including the information to be included in the response signal.
